# EUROPÄISCHE PATENTSCHRIFT

(11) **EP 1 501 993 B1**
(45) Veröffentlichungstag und Bekanntmachung des Hinweises auf die Patenterteilung: **16.11.2005**
(21) Anmeldenummer: 03720528.3
(22) Anmeldetag: 25.04.2003
(51) Int. Cl.: E05D 5/02, F16B 13/06, E06B 3/54

(54) **ANORDNUNG MIT TÜRBLATT UND SCHARNIEREN SOWIE DUSCHKABINE**
ASSEMBLY COMPRISING A DOOR LEAF AND HINGES, AND A SHOWER STALL
DISPOSITIF COMPORTANT UN VANTAIL DE PORTE ET DES CHARNIERES ET CABINE DE DOUCHE

(30) Priorität: 30.04.2002 DE 10219232
(43) Veröffentlichungstag der Anmeldung: 02.02.2005
(73) Patentinhaber: NAOMI Rechte GmbH, 49078 Osnabrück (DE)
(72) Erfinder: Kiefer, Zoltan Anton, 55122 Mainz (DE)
(74) Vertreter: Luderschmidt, Wolfgang
(86) Internationale Anmeldenummer: PCT/EP2003/004317
(87) Internationale Veröffentlichungsnummer: WO 2003/093617

(56) Entgegenhaltungen:
- DE-U- 29 923 347
- US-A- 5 718 547

## Beschreibung

Die Erfindung bezieht sich auf eine Anordnung mit einem Türblatt und mindestens zwei Scharnieren. Darüber hinaus betrifft die Erfindung eine Duschkabine mit einem oder mehreren Wandelementen und einer oder mehreren derartigen Anordnungen.

Die bekannten Duschkabinen werden im allgemeinen aus vorgefertigten Bauteilen vor Ort zusammengesetzt. Es sind Bauteilsätze für Duschkabinen bekannt, die ein oder mehrere Wandelemente sowie ein oder mehrere Türblätter umfassen, wobei das Türblatt mit zwei Scharnieren an dem Wandelement befestigt wird.

Zur Montage der Bauteile einer Duschkabine sind Beschläge unterschiedlichster Ausbildung bekannt. Diese Beschläge sollten zum einen eine stabile Konstruktion ermöglichen und sich zum anderen einfach montieren lassen. Darüber hinaus sollten die flachen Oberflächen der mit den Beschlägen verbundenen Bauteile nach Möglichkeit erhalten bleiben. Dies ist nicht nur aus ästhetischen Gesichtspunkten von Bedeutung, sondern erleichtert auch die Reinigung der Bauteile. Besonders an Glaswänden werden vorspringende Teile als störend empfunden.

Aus der DE 299 23 347 U1 ist eine Anordnung mit Türblatt und Scharnieren bekannt, bei der das Scharnier mittels Halteelementen und Schranken am Türblatt befestigt wird. Zu diesem Zweck weist das Türblatt Durchgangsbohrungen auf, durch die sich die Halteelemente und Schrauben erstrecken. Auf Grund der Durchgangslöcher ist die Oberfläche des Türblatts unterbrochen, was die oben beschriebenen Nachteile mit sich bringt.

Aus der US 5,718,547 ist ein Befestigungsmittel bekannt, das im wesentlichen aus einem Spreizelement besteht, das in ein Sackloch eingefügt werden kann. Nach dem Aufspreizen des Spreizelements ist das Befestigungsmittel sicher in dem Sackloch befestigt. Zum Aufspreizen des Spreizelements wird ein in das Befestigungsmittel einführbarer Bolzen vorgeschlagen.

Der Erfindung liegt die Aufgabe zugrunde, eine einfach zu montierende Anordnung mit Türblatt und Scharnieren zu schaffen, die eine stabile Konstruktion ohne vorspringende Teile ermöglicht. Eine weitere Aufgabe der Erfindung ist, eine Duschkabine mit einem oder mehreren Wandelementen und einer oder mehreren derartigen Anordnungen zu schaffen.

Die Lösung dieser Aufgaben erfolgt mit den in den Patentansprüchen 1 und 14 angegebenen Merkmalen.

Die Anordnung gemäss der Erfindung umfasst ein Türblatt mit mindestens zwei Scharnieren sowie weitere Befestigungselemente für die Scharniere an dem Türblatt. Die Scharniere weisen jeweils einen türseitigen und wandseitigen Scharnierteil und einen Scharnierzapfen auf, auf den die beiden Scharnierteile aufgesteckt werden.

Die Befestigungselemente für die Scharniere umfassen Spreizdübel, die ein distales Spreizelement und ein proximales Halte- und Anschlagelement aufweisen. Die Verbindungstechnik beruht darauf, dass die Spreizdübel in hinterschnittene Sacklöcher des Türblatts eingesetzt werden. Da keine Durchgangsbohrungen erforderlich sind, bleibt die flache Oberfläche des Türblatts an der Innenseite erhalten.

Des weiteren umfassen die Befestigungselemente Spreiz-/Befestigungsmittel, mit denen einerseits die Spreizelemente der Spreizdübel gespreizt und andererseits das Scharnier an der Türplatte befestigt wird.

Die hinterschnittenen Sacklöcher können mit bekannten Bohrverfahren an Türblättern aus unterschiedlichsten Materialien angebracht werden. Vorzugsweise besteht das Türblatt aus einem mineralischen Werkstoff oder Kunststoff. Die besonderen Vorteile der Verbindungstechnik kommen insbesondere bei Türblättern aus Glas zum Tragen.

Das proximale Halte- und Anschlagelement der Spreizdübel dient nicht nur zur sicheren Befestigung der Spreiz-/Befestigungsmittel, sondern auch zur Montage des Spreizdübels. Vorzugsweise ist das Halte- und Anschlagelement als mehrkantiger Schraubenkopf ausgebildet. Grundsätzlich ist aber auch jede andere Form möglich.

Das Spreizelement der Spreizdübel ist vorzugsweise als eine mit einem Innengewinde versehenen Hülse mit Spreizhaken ausgebildet. Zur sicheren Fixierung des Spreizdübels sollten mindestens zwei, vorzugsweise drei oder auch mehr Spreizhaken vorgesehen sein. Nach dem Spreizen der Spreizelemente werden die Zugkräfte gleichmässig auf die Auflagefläche im Sackloch verteilt.

Bei einer bevorzugten Ausführungsform weisen die Spreiz-/Befestigungsmittel einen Schraubenbolzen und eine Mutter auf, wobei der Schraubenbolzen zweckmässigerweise einen Innen-Mehrkant aufweist. Somit lässt sich der Schraubenbolzen mit den bekannten Mehrkant-Schlüsseln einfach in die mit dem Innengewinde versehene Hülse des Spreizdübels einschrauben, wodurch die Spreizhaken auseinandergedrückt werden. Bei dieser Ausführungsform weist das Scharnier ein Durchgangsloch für den Schraubenbolzen auf. Das Durchgangsloch ist vorteilhafterweise ein Langloch, so dass sich die Teile exakt gegeneinander ausrichten lassen.

Eine alternative Ausführungsform zeichnet sich dadurch aus, dass ein Durchgangsloch im Scharnier nicht erforderlich ist. Dadurch entfällt auch eine Querbohrung im Türblatt für einen Schraubenbolzen, die von aussen sichtbar wäre. Die Spreiz-/Befestigungsmittel weisen bei dieser Ausführungsform ein im Türblatt fixierbares Montageteil mit einer Bohrung zur Aufnahme einer Schraube auf, mit der das Montageteil mit dem Spreizdübel verschraubt wird. Das Montageteil wird in ein Sackloch des Scharnierteils eingesetzt. Die Fixierung des Montageteils in dem Sackloch des Türblatts erfolgt vorzugsweise mit einer Klemmschraube, die in eine Längsbohrung des Türblatts geschraubt wird.

Eine genaue Positionierung des Scharnierteils am Türblatt macht eine besonders bevorzugte Ausführungsform möglich, bei der die Bohrung des Montageteils zur Aufnahme der Schraube exzentrisch ist. Die exakte Ausrichtung des Scharnierteils am Türblatt erfolgt einfach durch Drehen des Montageteils.

Eine exakte Ausrichtung der Teile wird dann erreicht, wenn der Kopf der Schraube und die Bohrung des Montageteils konisch sind.

Mit der erfindungsgemässen Anordnung können Duschkabinen mit einem oder mehreren Türblättern und Wandelementen aufgebaut werden. Dabei kann das Türblatt beispielsweise mit mindestens zwei Scharnieren an nur einem Wandelement befestigt werden, wobei die Wände des Raumes die anderen seitlichen Begrenzungen bilden. Beispielsweise kann die Duschkabine aber auch aus zwei Wandelementen sowie einem Türblatt zusammengesetzt werden. Darüber hinaus kann die Duschkabine auch zwei Türblätter umfassen.

Im Folgenden werden mehrere Ausführungsbeispiele der Erfindung unter Bezugnahme auf die Zeichnungen näher erläutert.

Es zeigen:
- Figur 1: einen Teil eines Wandelements und eines Türblatts zusammen mit einem Scharnier und den erforderlichen Befestigungselementen,

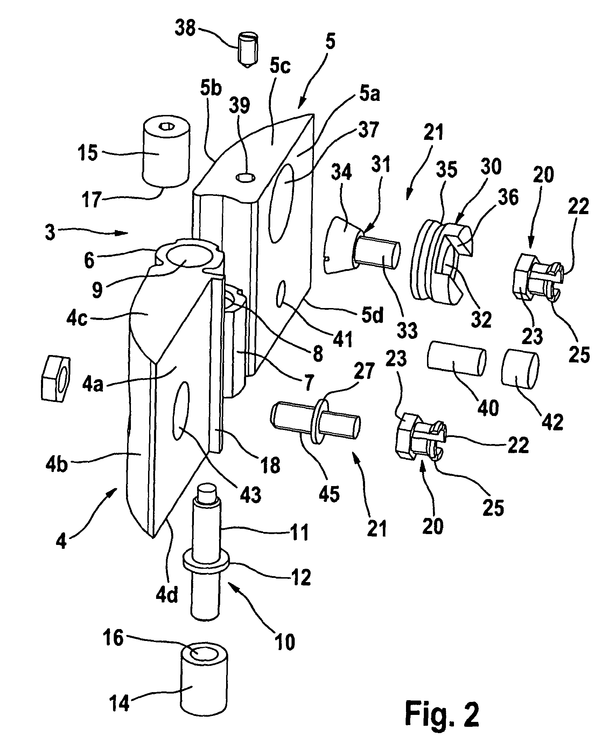

- Figur 2: das Scharnier aus der Ansicht des Pfeils II von Figur 1 in einer vergrösserten Explosionsdarstellung zusammen mit den Befestigungselementen,

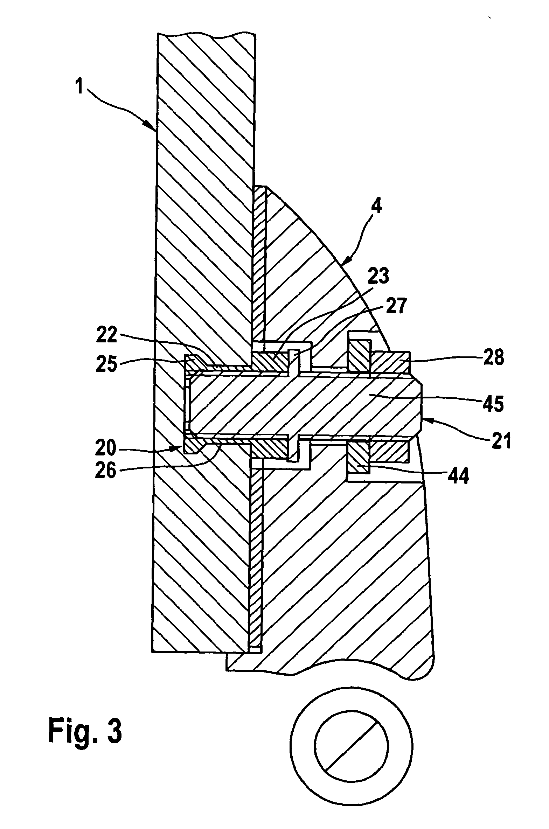

- Figur 3: einen Schnitt durch das Türblatt und das türblattseitige Scharnierteil in vergrösserter Darstellung und

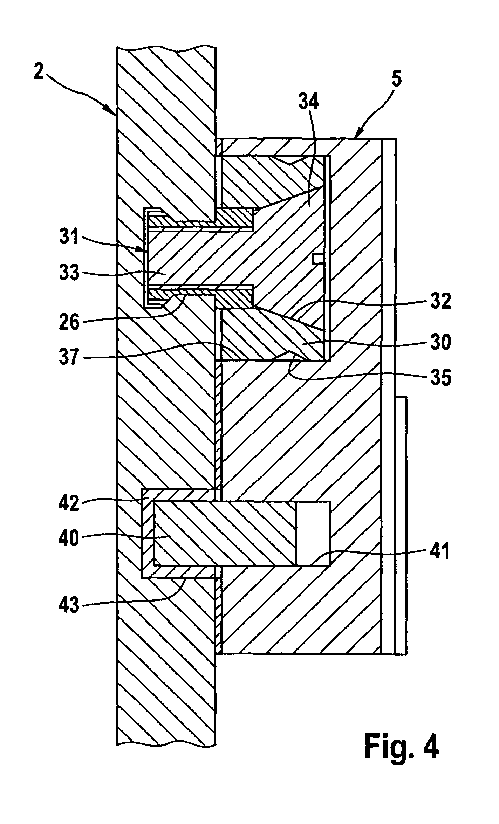

- Figur 4: in vergrösserter Darstellung einen Schnitt durch das Wandelement und das wandseitige Scharnierteil.

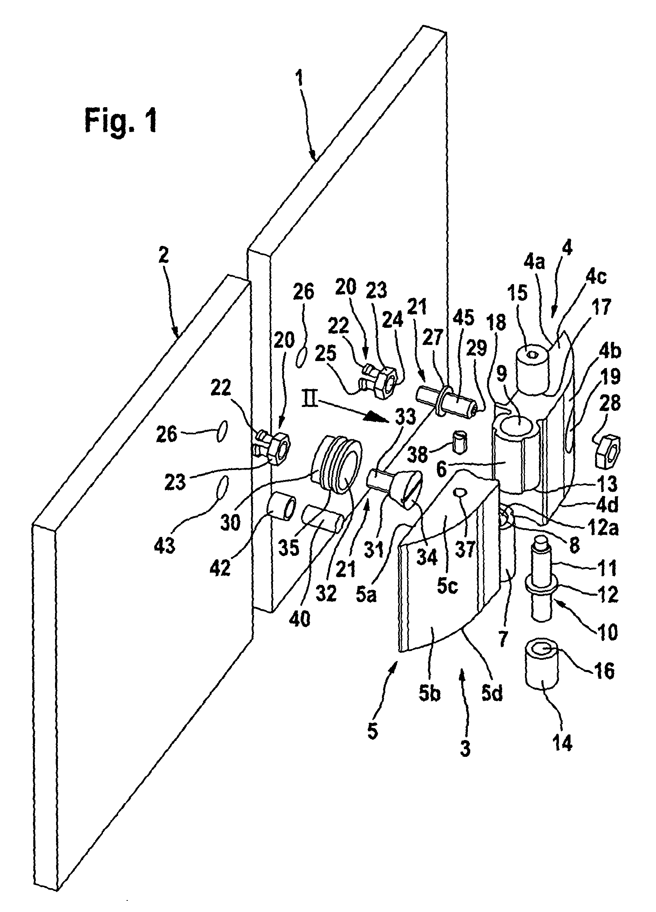

Figur 1 zeigt einen Ausschnitt aus einem Türblatt 1 und einem Wandelement 2 zusammen mit einem Scharnier 3 sowie den Befestigungselementen für das Scharnier. Das Wandelement und das Türblatt sind rechteckförmige Glasplatten. Das Türblatt ist an dem Wandelement mit zwei Scharnieren angelenkt, von denen in Figur 1 nur das obere Scharnier gezeigt ist. Das untere und obere Scharnier und deren Befestigungselemente sind identisch.

Das Ausführungsbeispiel von Figur 1 dient der Illustration von zwei verschiedenen Verbindungstechniken. In der Praxis wird aber im allgemeinen jeweils nur von einer der beiden Verbindungstechniken Gebrauch gemacht.

Das Scharnier weist einen türseitigen Scharnierteil 4 und einen wandseitigen Scharnierteil 5 auf. Beide Scharnierteile 4, 5 weisen eine ebene Innenseite 4a bzw. 5a, die auf dem Türblatt 1 bzw. dem Wandelement 2 aufliegt und eine gewölbte Aussenseite 4b bzw. 5b sowie eine ebene Ober- und Unterseite 4c bzw. 5c und 4d bzw. 5d auf.

An den innen liegenden Längsseiten weisen die Scharnierteile 4, 5 ein oberes bzw. unteres Aufnahmestück 6 bzw. 7 mit einer zylindrischen Längsbohrung 8 bzw. 9 für einen Scharnierzapfen 10 auf. Der Scharnierzapfen 10 ist ein zylindrischer Metallstift 11 mit einem umlaufenden Ansatz 12 zwischen seinen Enden. Der umlaufende Ansatz 11 des Scharnierzapfens 10 wird passend in die zylindrische Vertiefung 12a, 13 der Aufnahmestücke 6, 7 eingesetzt, die von einem umlaufenden Rand in den Längsbohrungen 8, 9 der Aufnahmestücke 6, 7 gebildet wird, wobei sich der Metallstift durch jeweils eine Bohrung in das Aufnahmestück erstreckt. Die Längsbohrungen 8, 9 der Aufnahmestücke 6, 7 werden jeweils mit einem Stopfen 14, 15 verschlossen, der eine zylindrische Bohrung 16, 17 aufweist, in die sich der Metallstift 11 des Scharnierzapfens 10 erstreckt.

Beide Scharnierteile 4, 5 sind grundsätzlich identisch. Bei einer bevorzugten Ausführungsform jedoch weist das türseitige Scharnierteil 4 zur Verdrehsicherung ein längslaufendes Anschlagelement 18 auf, mit dem das türseitige Scharnierteil 4 an der Längskante des Türblatts anliegt.

Nachfolgend wird die Verbindungstechnik des türseitigen Scharnierteils 4 im einzelnen beschrieben, wobei auch das wandseitige Scharnierteil 5 von der gleichen Verbindungstechnik Gebrauch machen kann. Diese Verbindungstechnik setzt voraus, dass in dem Scharnierteil 4 eine Querbohrung 19 vorgesehen ist. Die Verbindungselemente zur Befestigung des türseitigen Scharnierteils 4 am Türblatt 1 umfassen einen Spreizdübel 20 und Spreiz- und Befestigungsmittel 21.
Der Spreizdübel 20 weist ein distales Spreizelement 22 und ein proximales Halte- und Anschlagelement 23 auf.

Das distale Spreizelement 22 ist eine mit einem Innengewinde 24 versehene Hülse, die in Längsrichtung unter Bildung von 3 vorspringenden Spreizhaken 25 geschlitzt ist. Das proximale Halte- und Anschlagelement 23 ist als mehrkantiger Schraubenkopf ausgebildet.

Der Spreizdübel wird in einem hinterschnittenen Sackloch 26 im Türblatt 1 fest verankert. Verfahren zum Anbringen des Sacklochs 26 sind bekannt, bei denen in einem Arbeitsgang mit einem Werkzeug zylindrisch gebohrt und anschliessend konisch hinterschnitten wird.

Die Spreiz-/Befestigungsmittel 21 umfassen einen Schraubenbolzen 45, der zwischen seinen Enden einen umlaufenden Ansatz 27 hat, und eine Mutter 28 ggf mit Unterlegscheibe 44. Das nach aussen weisende Ende des Schraubenbolzens 45 ist mit einem Innen-Mehrkant 29, vorzugsweise zur Aufnahme eines SechskantSchlüssels versehen.

Das türseitige Scharnierteil 4 wird an dem Türblatt 1 wie folgt montiert. Zunächst wird der Spreizdübel 20 mit dem Spreizelement 22 in das hinterschnittene Sackloch 26 eingesetzt. Anschliessend wird der Schraubenbolzen 45 mit einem Sechskant-Schlüssel in das Spreizelement 22 eingeschraubt, wodurch die Spreizhaken 25 des Spreizelements gespreizt werden. Der Schraubenbolzen ist nun fest am Türblatt verankert. Daraufhin wird das Scharnierteil 4 mit dem Schraubenbolzen 45 fest verschraubt.

Nachfolgend wird die alternative Verbindungstechnik des wandseitigen Scharnierteils 5 beschrieben. Von dieser Verbindungstechnik kann auch das türseitige Scharnierteil 4 Gebrauch machen, so dass beide Scharnierteile sowie deren Befestigungselemente identisch sind. Die einander entsprechenden Teile sind mit den gleichen Bezugszeichen versehen.

Die alternative Verbindungstechnik macht von dem gleichen Spreizdübel 20 Gebrauch, der in einem hinterschnittenen Sackloch 26 des Wandelements 2 fest verankert wird. Eine Querbohrung ist im wandseitigen Scharnierteil 5 aber nicht erforderlich. Daher sind auch keine Verbindungselemente an der Aussenseite 5d des Scharnierteils sichtbar.

Die Spreiz-/Befestigungsmittel 21 umfassen bei der alternativen Ausführungsform ein Montageteil 30 und eine Schraube 31, mit der das Montageteil mit dem Spreizdübel 20 verschraubt wird. Das Montageteil 30 weist eine exzentrische Bohrung 32 zur Aufnahme des Schraubenschafts 33 der Schraube 31 auf. Der Kopf 34 der Schraube 31 und die Bohrung 32 des Montageteils 30 sind konisch. Das Montageteil 30 hat am Umfang eine umlaufende Nut 35 und an der Stirnseite, die dem Wandelement 2 zugewandt ist, eine Ausnehmung 36 zur verdrehsicheren Aufnahme des mehrkantigen Schraubenkopfes 23 des Spreizdübels 20.

An der Innenseite 5a des wandseitigen Scharnierteils 5 ist ein zylindrisches Sackloch 37 vorgesehen, in die das Montageteil 30 passend einsetzbar ist. Der Fixierung des Montageteils 30 in dem Sackloch 37 dient eine Klemmschraube 38, die in eine Längsbohrung 39 an der Oberseite 5c des wandseitigen Scharnierteils 5 eingeschraubt wird. Die Längsbohrung 39 ist derart angeordnet, dass sich die Klemmschraube 38 bis in die umlaufende Nut 35 des Montageteils 30 erstreckt.

Zur Verdrehsicherung des wandseitigen Scharnierteils ist ein zusätzlicher Zapfen 40 vorgesehen, der einerseits in ein passendes Sackloch 41 unterhalb des Sacklochs 37 für das Montageteil 30 und andererseits in eine entsprechende Hülse 42 eingesetzt wird, die wiederum in ein passendes Sackloch 43 in dem Bodenelement 2 unterhalb des Sacklochs 26 für den Spreitzdübel 20 eingesetzt wird. Anstelle dieses zusätzlichen Zapfens kann zur Verdrehsicherung aber auch das längslaufende Anschlagelement 18 des türseitigen Scharnierteils 4 an dem wandseitigen Scharnierteil 5 vorgesehen sein.

Das wandseitige Scharnierteil 5 wird an dem Wandelement 2 wie folgt montiert. Nach der Verankerung des Spreitzdübels 20 in dem hinterschnittenen Sackloch 26 wird das Montageteil 30 auf den mehrkantigen Schraubenkopf 23 des Spreitzdübels 20 aufgesetzt und die Schraube 31 wird in den Spreitzdübel 20 eingeschraubt. Anschliessend wird das Montageteil 30 in das Sackloch 37 des wandseitigen Scharnierteils 5 eingesetzt und die Klemmschraube 38 wird in das Scharnierteil geschraubt. Damit ist das Montageteil mit dem Scharnierteil fest verankert.

Da das zweite Scharnier, mit dem das Türblatt am Wandelement angelenkt wird, mit dem ersten Scharnier identisch ist, erübrigt sich eine weitere Beschreibung und zeichnerische Darstellung desselben. Auch hier sind wieder alle Variationen möglich, die sich aus den unterschiedlichen Verbindungstechniken ergeben. Bei sehr schweren Türblättern können aber auch mehr als zwei Scharniere vorgesehen sein.

## Patentansprüche

1. Anordnung mit
einem Türblatt (1), mindestens zwei Scharnieren (3) aus jeweils einem türseitigen und einem wandseitigen Scharnierteil (4, 5) mit jeweils einer Längsbohrung (8, 9)
mindestens zwei Schanüerzapfen (12), auf die die Scharnierteile aufsteckbar sind,
**dadurch gekennzeichnet, dass**
das Türblatt mindestens zwei hinterschnittene Sacklöcher (26) aufweist, und
mindestens zwei Spreizdübeln (20), die jeweils ein distales Spreizelement (22) und ein proximales Halte- und Anschlagelement (23) aufweisen, und Spreizmittel (21) zum Spreizen der Spreizdübel und Befestigungsmittel (21) zur Befestigung des Scharniers am Türblatt vorgesehen sind.

2. Anordnung nach Anspruch 1, **dadurch gekennzeichnet, dass** das proximale Spreizelement (22) des Spreizdübels (20) als ein mit einem Innengewinde versehener Körper mit Spreizhaken (25) ausgebildet ist.

3. Anordnung nach Anspruch 1 oder 2, **dadurch gekennzeichnet, dass** das proximale Halte- und Anschlagelement (23) des Spreizdübels (20) als ein mehrkantiger Schraubenkopf ausgebildet ist.

4. Anordnung nach einem der Ansprüche 1 bis 3, **dadurch gekennzeichnet, dass** die Spreiz-/Befestigungsmittel (20) einen Schraubenbolzen (45) und eine Mutter (28) aufweisen.

5. Anordnung nach Anspruch 4, **dadurch gekennzeichnet, dass** der Schraubenbolzen (45) einen Innen-Mehrkant aufweist.

6. Anordnung nach einem der Ansprüche 1 bis 5, **dadurch gekennzeichnet, dass** das Scharnierteil (4) ein Durchgangsloch (19), vorzugsweise Langloch, aufweist.

7. Anordnung nach einem der Ansprüche 1 bis 3, **dadurch gekennzeichnet, dass** die Spreiz-Befestigungsmittel (20) ein im Türblatt fixierbares Montageteil (30) mit einer Bohrung (32) zur Aufnahme einer Schraube (31) mit Schraubenschaft (33) und Kopf (34) aufweisen, mit der das Montageteil mit dem Spreizdübel (20) verschraubbar ist.

8. Anordnung nach Anspruch 7, **dadurch gekennzeichnet, dass** die Bohrung (32) des Montageteils (30) exzentrisch ist.

9. Anordnung nach Anspruch 7 oder 8, **dadurch gekennzeichnet, dass** der Kopf (34) der Schraube (31) und die Bohrung (32) des Montageteils (30) konisch sind.

10. Anordnung nach einem der Ansprüche 7 bis 9, **dadurch gekennzeichnet, dass** in dem Scharnierteil (5) eine Sackloch (37) zur Aufnahme des Montageteils (30) vorgesehen ist.

11. Anordnung nach Anspruch 10, **dadurch gekennzeichnet, dass** das Montageteil (30) in dem Scharnierteil (5) mit einer Klemmschraube (38) fixierbar ist, die in eine Bohrung (37) des Scharnierteils schraubbar ist.

12. Anordnung nach einem der Ansprüche 1 bis 11, **dadurch gekennzeichnet, dass** der Scharnierzapfen (10) einen umlaufenden Ansatz (12) aufweist.

13. Anordnung nach einem der Ansprüche 1 bis 12, **dadurch gekennzeichnet, dass** das Türblatt (1) aus einem mineralischen Werkstoff oder Kunststoff besteht.

14. Duschkabine mit einer oder mehreren Seitenwänden und einer oder mehreren Anordnungen nach einem der Ansprüche 1 bis 13.

## Claims

1. Assembly having a door leaf (1), having at least two hinges (3) each comprising a door hinge-part and a wall hinge-part (4, 5) each with a longitudinal bore (8, 9), and having at least two hinge-pins (12) onto which the hinge-parts can be fitted, **characterised in that** the door leaf has at least two undercut blind holes (26), and at least two expanding plugs (20) are provided which each have a distal expanding element (22) and a proximal holding and abutment element (23), and there are provided expander means (21) for expanding the expanding plugs and fastening means (21) for fastening the hinge to the door leaf.

2. Assembly according to claim 1, **characterised in that** the proximal expanding element (22) of the expanding plug (20) is in the form of a body having expanding hooks (25) that is provided with an inside thread.

3. Assembly according to claim 1 or 2, **characterised in that** the proximal holding and abutment element (23) of the expanding plug (20) is in the form of a polygonal screw head or bolt head.

4. Assembly according to one of claims 1 to 3, **characterised in that** the expander/fastening means (20) have a threaded pin (45) and a nut (28).

5. Assembly according to claim 4, **characterised in that** the threaded pin (45) has a polygonal socket.

6. Assembly according to one of claims 1 to 5, **characterised in that** the hinge part (4) has a through-hole (19), preferably a slotted hole.

7. Assembly according to one of claims 1 to 3, **characterised in that** the expander/fastening means (20) have a mounting part (30) able to be secured in place in the door leaf, which mounting part (30) has a hole (32) to receive a screw (31) having a shank (33) and head (34), with which screw (31) the mounting part can be screwed to the expanding plug (20).

8. Assembly according to claim 7, **characterised in that** the hole (32) in the mounting part (30) is off-centre.

9. Assembly according to claim 7 or 8, **characterised in that** the head (34) of the screw (31) and the hole (32) in the mounting part (30) are conical.

10. Assembly according to one of claims 7 to 9, **characterised in that** a blind hole (37) to receive the mounting part (30) is provided in the hinge-part (5).

11. Assembly according to claim 10, **characterised in that** the mounting part (30) can be secured in place in the hinge-part (5) with a clamping screw (38) which can be screwed into a hole (3 7) in the hinge-part.

12. Assembly according to one of claims 1 to 11, **characterised in that** the hinge pin (10) has a surrounding projection (12).

13. Assembly according to one of claims 1 to 12, **characterised in that** the door leaf (1) is composed of a mineral material or plastics material.

14. Shower stall having one or more side-walls and one or more assemblies according to one of claims 1 to 13.

## Revendications

1. Dispositif comportant un vantail de porte (1), au moins deux charnières (3) constituées chacune d'une partie de charnière (4, 5) côté porte et une côté mur avec chacune un alésage longitudinal (8, 9), au moins deux chevilles de charnière (12), sur lesquelles sont accrochables les parties de charnière, **caractérisé en ce que** le vantail de porte présente au moins deux trous borgnes contre-dépouillés (26), et au moins deux chevilles à expansion (20), qui présentent chacune un élément d'expansion distal (22) et un élément de fixation et de butée proximal (23), et des moyens d'expansion (21) destinés à l'expansion de la cheville à expansion et des moyens de fixation (21) destinés à la fixation de la charnière sont prévus au niveau du vantail de porte.

2. Dispositif selon la revendication 1, **caractérisé en ce que** l'élément d'expansion proximal (22) de la cheville à expansion (20) est réalisé sous la forme d'un corps muni d'un taraudage avec des crochets d'expansion (25).

3. Dispositif selon la revendication 1 ou 2, **caractérisé en ce que** l'élément de fixation et de butée proximal (23) de la cheville à expansion (20) est réalisé sous la forme d'un tête de vis polygonale.

4. Dispositif selon l'une quelconque des revendications 1 à 3, **caractérisé en ce que** les moyens d'expansion/de fixation (20) présentent un boulon fileté (45) et un écrou (28).

5. Dispositif selon la revendication 4, **caractérisé en ce que** le boulon fileté (45) présente un polygone intérieur.

6. Dispositif selon l'une quelconque des revendications 1 à 5, **caractérisé en ce que** la partie de charnière (4) présente un orifice de passage (19), de préférence un trou oblong.

7. Dispositif selon l'une quelconque des revendications 1 à 3, **caractérisé en ce que** les moyens d'expansion/de fixation (20) présentent une pièce d'assemblage (30) fixable dans le vantail de porte (1) avec un alésage (32) destiné à la réception d'une vis (31) avec tige de vis (33) et tête (34), au moyen de laquelle la pièce d'assemblage peut être vissée avec la cheville à expansion (20).

8. Dispositif selon la revendication 7, **caractérisé en ce que** l'alésage (32) de la pièce d'assemblage (30) est excentrique.

9. Dispositif selon la revendication 7 ou 8, **caractérisé en ce que** la tête (34) de la vis (31) et l'alésage (32) de la pièce d'assemblage (30) sont coniques.

10. Dispositif selon l'une quelconque des revendications 7 à 9, **caractérisé en ce qu'**un trou borgne (37) destiné à la réception de la pièce d'assemblage (30) est prévu dans la partie de charnière (5).

11. Dispositif selon la revendication 10, **caractérisé en ce que** la pièce d'assemblage (30) est fixable dans la partie de charnière (5) au moyen d'une vis de serrage (38), qui peut être vissée dans un alésage (39) de la partie de charnière.

12. Dispositif selon l'une quelconque des revendications 1 à 11, **caractérisé en ce que** la cheville de charnière (10) présente une saillie périphérique (12).

13. Dispositif selon l'une quelconque des revendications 1 à 12, **caractérisé en ce que** le vantail de porte (1) est constitué d'un matériau minéral ou d'une matière plastique.

14. Cabine de douche comportant une ou plusieurs parois latérales et un ou plusieurs dispositifs selon l'une quelconque des revendications 1 à 13.
